# DEMANDE DE BREVET EUROPEEN

(11) **EP 3 629 310 A1**
(43) Date de publication de la demande: **01.04.2020**
(21) Numéro de dépôt: 19199266.8
(22) Date de dépôt: 24.09.2019
(51) Int. Cl.: G08G 1/005, B60R 21/00, G08G 1/01, G08G 1/16, B60Q 1/52, B60R 21/01, B60Q 5/00

(54) **SYSTÈME DE GÉNÉRATION AUTOMATIQUE D'ALERTES DESTINÉES AUX USAGERS D'UNE ROUTE**

(30) Priorité: 25.09.2018 FR 1858722
(71) Demandeur: Transdev Group, 92130 Issy les Moulineaux (FR)
(72) Inventeur: DARNAUD, Thomas, 78000 VERSAILLES (FR); KARAOGUZ, Cem, 91120 PALAISEAU (FR); LEVASSOR, William, 92500 RUEIL MALMAISON (FR); BAUDET, Louis, 78000 VERSAILLES (FR)
(74) Mandataire: Lavoix

(57) **Abrégé**

L'invention concerne un système et un procédé de génération automatique d'alertes destinées aux usagers d'une route, embarqué sur un véhicule automobile comportant des capteurs, un dispositif électronique programmable (24) embarqué, et au moins un dispositif d'alerte, sonore ou visuel. Le dispositif électronique programmable (24) comporte au moins un processeur (28) adapté à mettre en oeuvre au moins un algorithme de détection d'éléments de trafic situés dans une zone environnante dudit véhicule, ainsi qu'un module (32) d'analyse des éléments de trafic détectés durant un intervalle temporel, permettant d'associer chaque élément de trafic détecté à une catégorie prédéterminée, et calculer un niveau de confiance associé, un module (34) de détermination d'une situation à risque, parmi une pluralité de situations de risque prédéterminées, impliquant des éléments de trafic détectés, en fonction du niveau de confiance calculé, au moins un desdits éléments de trafic étant associé à au moins un usager de la route externe audit véhicule, et un module de commande (36) d'au moins un desdits dispositifs d'alerte (18) embarqués pour avertir ledit au moins un usager de la route du risque détecté.

## Description

La présente invention concerne un système de génération automatique d'alertes destinées aux usagers d'une route, embarqué sur un véhicule automobile, un procédé et un programme d'ordinateur associés.

L'invention se situe dans le domaine du pilotage sécurisé de véhicules automobiles, et en particulier dans le domaine de la sécurité routière. Elle trouve une application notamment dans le domaine des véhicules automobiles autonomes ou semi-autonomes.

Dans le domaine du pilotage sécurisé des véhicules automobiles, et notamment dans le pilotage autonome, un des problèmes principaux est l'identification anticipée d'obstacles sur le trajet d'un véhicule un mouvement, permettant de prendre des mesures correctrices pour que le véhicule ne percute pas ces obstacles.

Il existe des systèmes d'aide à la conduite automobile, appelés systèmes ADAS pour « Advanced Driver Assistance Systems », et des systèmes d'identification et d'évitement d'obstacles pour véhicules autonomes. De tels systèmes permettent d'identifier des éléments de trafic présents dans un environnement d'un véhicule en mouvement, grâce à des capteurs et à des systèmes calculatoires embarqués, et de déterminer quels éléments de trafic sont susceptibles de constituer d'éventuels obstacles sur la trajectoire de ce véhicule.

Les éléments de trafic considérés sont fixes ou mobiles, et sont associés ou non à d'autres usagers de la route, par exemple conducteurs d'autres véhicules ou piétons. Les éléments de trafic fixes sont par exemple des rambardes de sécurité, trottoirs, panneaux de signalisation ou des véhicules stationnés. On comprend qu'il est critique d'éviter toute collision entre un véhicule en mouvement et de tels obstacles.

Les systèmes d'aide à la conduite automobile connus sont adaptés pour lever des alertes en cas de détection de présence d'un obstacle, pouvant induire une situation à risque d'incident ou d'accident, impliquant ou non un autre usager de la route. Par exemple, une alerte sonore et/ou visuelle est levée, à l'intention du conducteur d'un véhicule équipé d'un système ADAS.

Les situations à risque impliquent en général plusieurs usagers de la route, par exemple plusieurs véhicules dans le cas d'un risque de collision, et les systèmes actuels sont adaptés à avertir le conducteur d'un véhicule qui à son tour peut actionner des avertisseurs (par exemple avertisseur sonore ou feux) pour avertir des autres usagers de la route d'un risque imminent. Les véhicules autonomes sont équipés de systèmes prévus pour éviter les collisions entre ces véhicules et d'autres véhicules.

Il est souhaitable d'augmenter la sécurité routière pour tous les usagers de la route.

A cet effet, l'invention propose un système de génération automatique d'alertes destinées aux usagers d'une route, embarqué sur un véhicule automobile comportant des capteurs embarqués, un dispositif électronique programmable embarqué et étant équipé d'au moins un dispositif d'alerte, sonore ou visuel, lesdits capteurs étant adaptés à fournir des informations au dispositif électronique programmable, ledit dispositif électronique programmable comportant au moins un processeur adapté à mettre en oeuvre au moins un algorithme de détection d'éléments de trafic situés dans une zone environnante dudit véhicule. Le processeur est configuré pour mettre en œuvre un module d'analyse des éléments de trafic détectés durant un intervalle temporel, permettant d'associer chaque élément de trafic détecté à une catégorie prédéterminée, et à calculer un niveau de confiance associé, et un module de détermination d'une situation à risque, parmi une pluralité de situations de risque prédéterminées, impliquant des éléments de trafic détectés, en fonction du résultat du module d'analyse et du niveau de confiance calculé, au moins un desdits éléments de trafic étant associé à au moins un usager de la route externe audit véhicule. Le système est adapté à mettre en œuvre au moins un desdits dispositifs d'alerte embarqués pour avertir ledit au moins un usager de la route du risque détecté.

Avantageusement, l'invention permet de générer des alertes à destination d'usagers de la route externes au véhicule automobile embarquant le système proposé, que le véhicule soit autonome ou semi-autonome, suite à la détermination de situations à risque pouvant impliquer des éléments de trafic externes au véhicule.

Avantageusement, le calcul d'un niveau de confiance permet d'éviter une génération d'alerte intempestive.

Le système de génération automatique d'alertes selon l'invention peut également présenter une ou plusieurs des caractéristiques ci-dessous, prises indépendamment ou selon toutes les combinaisons techniquement envisageables.

Pour chaque élément de trafic en mouvement, le niveau de confiance est également associé à au moins un paramètre caractérisant le mouvement dudit élément de trafic.

Les dispositifs d'alerte comprennent au moins un écran d'affichage placé de manière à être visible de l'extérieur du véhicule, et /ou au moins un dispositif d'alerte sonore.

La mise en œuvre desdits dispositifs d'alerte est effectuée contextuellement à la situation à risque déterminée.

Le système adapté à déterminer une position dudit au moins un usager de la route externe et à sélectionner au moins un desdits dispositifs d'alerte à actionner en fonction de ladite position.

Selon un autre aspect, l'invention concerne un procédé de génération automatique d'alertes destinées aux usagers d'une route, embarqué sur un véhicule automobile comportant des capteurs embarqués, un dispositif électronique programmable embarqué et étant équipé d'au moins un dispositif d'alerte, sonore ou visuel, lesdits capteurs étant adaptés à fournir des informations au dispositif électronique programmable, ledit dispositif électronique programmable comportant au moins un processeur adapté à mettre en œuvre au moins un algorithme de détection d'éléments de trafic situés dans une zone environnante dudit véhicule. Ce procédé est mis en œuvre par ledit processeur et comporte des étapes de :
- analyse des éléments de trafic détectés durant un intervalle temporel, permettant d'associer chaque élément de trafic détecté à une catégorie prédéterminée, et calcul d'un niveau de confiance associé,
- détermination d'une situation à risque, parmi une pluralité de situations de risque prédéterminées, impliquant des éléments de trafic détectés, en fonction du résultat de l'étape d'analyse et du niveau de confiance calculé, au moins un desdits éléments de trafic étant associé à au moins un usager de la route externe audit véhicule,
- mise en œuvre d'au moins un desdits dispositifs d'alerte embarqués pour avertir ledit au moins un usager de la route du risque détecté.

Le procédé de génération automatique d'alertes selon l'invention peut également présenter une ou plusieurs des caractéristiques ci-dessous, prises indépendamment ou selon toutes les combinaisons techniquement envisageables.

L'étape d'analyse met en œuvre un algorithme de classification à base de réseaux de neurones.

Le niveau de confiance est déterminé en fonction de critères de performance de l'algorithme de classification à base de réseaux de neurones, comprenant un niveau de précision et un niveau de rappel.

La mise en œuvre d'un des dispositifs d'alerte comprend une sélection d'un dispositif à actionner en fonction d'une position spatiale d'au moins un élément de trafic impliqué dans ladite situation à risque déterminée, et une commande d'actionnement du ou des dispositifs d'alerte sélectionnés avec un message d'alerte généré contextuellement à ladite situation à risque déterminée.

Selon un autre aspect, l'invention concerne un support d'enregistrement d'informations, sur lequel sont mémorisées des instructions logicielles pour l'exécution d'un procédé de génération automatique d'alertes tel que brièvement décrit ci-dessus, lorsque ces instructions sont exécutées par un dispositif électronique programmable.

Selon un autre aspect, l'invention concerne également un programme d'ordinateur comportant des instructions logicielles qui, lorsqu'elles sont exécutées par un dispositif électronique programmable, mettent en œuvre un tel procédé de génération automatique d'alertes tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un véhicule automobile équipé d'un système de génération automatique d'alertes selon un mode de réalisation, dans un scénario d'utilisation ;
- la figure 2 est un bloc diagramme des principaux éléments d'un système de génération automatique d'alertes embarqué selon un mode de réalisation ;
- la figure 3 est un logigramme des étapes d'un procédé de génération automatique d'alertes selon un mode de réalisation de l'invention.

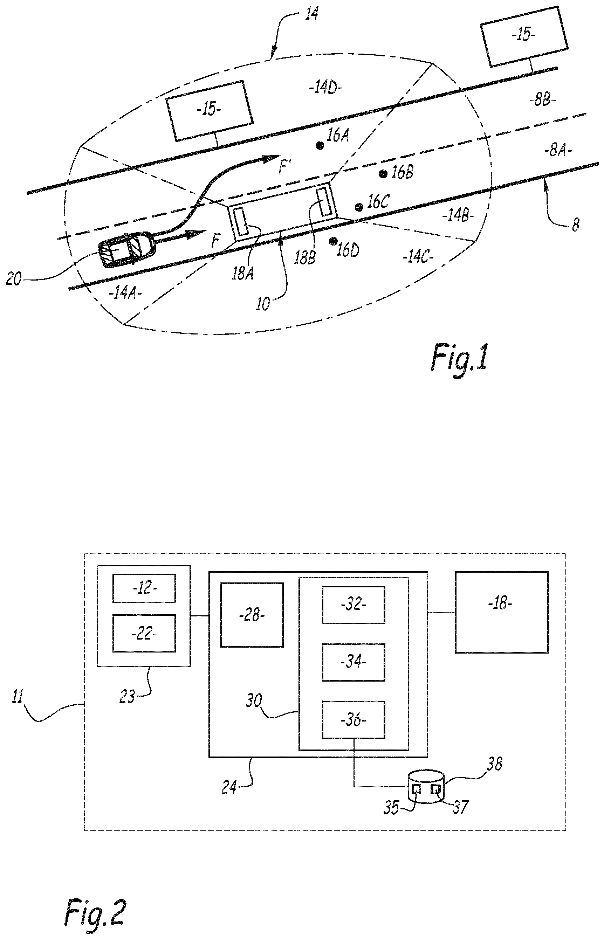

La figure 1 illustre schématiquement un cas d'utilisation d'un dispositif électronique d'identification d'obstacles sur le trajet d'un véhicule automobile 10.

Le véhicule automobile 10 est par exemple un véhicule autonome ayant un niveau d'automatisation (de l'anglais « level of automation ») supérieur ou égal à 3 selon le barème de l'Organisation Internationale des Constructeurs Automobiles (OICA). Par exemple, il s'agit d'un véhicule de transport de type quatre roues, ou bus ou autocar.

En variante, le véhicule automobile 10 est un véhicule conventionnel, piloté par un conducteur, mais équipé d'un système d'aide à la conduite, comportant en particulier de capteurs et/ou de récepteurs de données en provenance de capteurs externes.

Le véhicule 10 illustré dans l'exemple de la figure 1 roule sur une route 8, comportant dans l'exemple deux voies de circulation 8A et 8B.

La figure 2 illustre schématiquement un système de génération automatique d'alertes 11 embarqué par un véhicule automobile 10 selon un mode de réalisation.

Un tel véhicule 10 est équipé d'une pluralité de capteurs 12, par exemple de type lidar à balayage et/ou caméras, adaptés à détecter des objets présents dans une zone environnante 14 du véhicule 10. Bien entendu, un même véhicule 10 peut être équipé d'une pluralité de capteurs 12, chaque capteur ayant une zone de détection associée.

La zone environnante 14 comprend, dans un mode de réalisation, plusieurs sous-zones situées respectivement à l'avant, à l'arrière ou sur les côtés du véhicule 10 selon le positionnement des capteurs 12 sur le véhicule.

Par exemple, dans la figure 1, quatre sous-zones, référencées respectivement 14A, 14B, 14C et 14D forment la zone environnante 14.

Bien entendu, la zone environnante 14 se déplace en même temps que le véhicule.

Grâce aux capteurs 12, il est possible de détecter la présence d'éléments de trafic dans l'environnement 14 du véhicule 10, à un instant temporel donné ou dans un intervalle temporel donné. Il est également possible de détecter si les éléments de trafic sont fixes ou en mouvement, et d'obtenir des paramètres caractéristiques des éléments de trafic détectés (e.g. vitesse de déplacement, direction de déplacement).

On entend ici par élément de trafic tout élément présent dans un périmètre incluant les routes 8 considérées.

Un élément de trafic est soit fixe, soit en mouvement. Tout élément de trafic peut constituer un obstacle et être impliqué dans une situation à risque.

Un élément de trafic fixe est par exemple un panneau de signalisation, un feu de signalisation, un ralentisseur positionné en travers de la route, un élément de bord de route (trottoir, rambarde de sécurité).

Un élément de trafic mobile est par exemple un autre véhicule roulant sur la route (voiture, moto, vélo, bus...) ou un piéton. Certains éléments de trafic sont associés à des usagers de la route, qui sont par exemple conducteurs, passagers ou piétons.

Dans le scénario de la figure 1, le véhicule 10 est par exemple un véhicule de transport de passagers autonome, par exemple un bus, qui est temporairement à l'arrêt.

Un autre véhicule 20 arrive derrière le véhicule 10, se déplaçant avec une vitesse non nulle dans le sens de la flèche F. Le deuxième véhicule 20 est par exemple un véhicule avec conducteur à bord.

Un scénario possible est que le véhicule 20 emprunte le trajet référencé F' pour dépasser le véhicule 10. Par ailleurs, dans le scénario d'exemple de la figure 1,en plus du véhicule 20, des éléments de trafic 16A, 16B, 16C et 16D sont détectés par les capteurs 12 du système embarqué par le véhicule 10. Par exemple, il s'agit de piétons ayant quitté le véhicule 10.

Le véhicule 10 étant volumineux, il masque la visibilité du véhicule 20, en particulier des piétons 16B et 16C.

Si le véhicule 20 emprunte le trajet F', il existe un risque de collision important avec l'un des piétons 16B ou 16C.

Le système de génération automatique d'alerte permet d'identifier cette situation à risque et de générer une alerte à l'intention du conducteur du véhicule 20 et/ou à intention des piétons 16B et 16C, qui sont des usagers de la route concernés par la situation à risque détectée.

Par exemple, des dispositifs d'alerte 18A, 18B sont utilisés à cet effet.

Dans un mode de réalisation, les dispositifs d'alerte sont des écrans d'affichage, par exemple des écrans à diodes électroluminescentes, ou des écrans flexibles. En pratique, il est possible de prévoir un nombre quelconque d'écrans d'affichage, par exemple à l'arrière, à l'avant et sur les côtés du véhicule 10.

En variante et/ou en complément, des dispositifs d'alerte sonores sont utilisés, par exemple permettant de générer un son spécifique au type ou au niveau de risque, ou une alerte parlée par un système de synthèse vocale. Par exemple, les dispositifs d'alerte sonore sont des microphones, haut-parleurs, ou avertisseurs sonores (klaxon, gong, sonnette).

Dans un mode de réalisation, outre les capteurs embarqués 12, des capteurs fixes de bord de route 15 sont également présents, chaque capteur 15 ayant également une zone de détection d'éléments de trafic associée. Chaque capteur 15 est équipé d'un module de communication sans fil (non représenté), par exemple un module radio, et est adapté à transmettre des informations de position d'éléments de trafic détectés par le moyen de ce module de communication.

Le système de génération automatique d'alertes 11 comporte également au moins un module de communication sans fil 22, adapté à recevoir des informations de position d'éléments de trafic détectés par des capteurs fixes de bord de route.

Le ou les capteurs embarqués 12 et/ou le module de communications sans fil 22 adapté à recevoir des informations de position d'éléments de trafic détectés par des capteurs externes forment une unité 23 d'obtention d'informations permettant de détecter des éléments de trafic situés à proximité du véhicule 10.

Le système de génération automatique d'alertes comprend en outre un dispositif électronique programmable 24, adapté à commander les dispositifs d'alerte 18.

Le dispositif électronique programmable 24 est adapté à recevoir des informations issues des capteurs via l'unité 23, par exemple par l'intermédiaire d'une liaison filaire.

Le dispositif électronique programmable 24 est par exemple un calculateur de bord, comprenant un processeur 28 associé à une unité de mémoire 30.

Il est adapté à mettre en oeuvre :
- un module 32 d'analyse des éléments de trafic détectés, permettant d'associer chaque élément de trafic détecté à une catégorie prédéterminée, et à calculer un niveau de confiance associé ;
- un module 34 de détermination d'une situation à risque, parmi une pluralité de situations de risque prédéterminées, impliquant des éléments de trafic détectés, en fonction du niveau de confiance calculé, et
- un module 36 de commande des dispositifs d'alerte en fonction de la situation à risque déterminée.

Le système de génération automatique d'alertes comporte en outre une mémoire de stockage 38, qui peut être, dans un mode de réalisation, intégrée dans la mémoire 30, adaptée à mémoriser des données et paramètres, par exemple une base de données 35 de paramètres permettant de classifier les éléments de trafic en catégories prédéterminées, et une base de données 37 permettant d'identifier des situations à risque.

Avantageusement, la commande des dispositifs d'alerte est contextuelle, donc dépendante de la situation à risque déterminée.

Par exemple, dans le scénario de la figure 1, un affichage spécifique destiné au véhicule 20 est effectué sur l'écran d'affichage 18A situé à l'arrière du véhicule 10. Par exemple, une alerte sonore est commandée à l'avant du véhicule, à destination des piétons 16B et 16C identifiés.

Dans un mode de réalisation, les modules 32, 34 et 36 sont réalisés chacun sous forme d'un logiciel, ou d'une brique logicielle exécutable par le processeur 28.

La mémoire 30 du dispositif électronique programmable 24 est alors apte à stocker un logiciel de génération automatique d'alertes configuré pour mettre en œuvre un procédé de génération automatique d'alertes. Le processeur 28 est alors apte à exécuter ce logiciel.

En variante non représentée, les modules 32, 34 et 36 sont réalisés chacun sous forme d'un composant logique programmable, tel qu'un FPGA (de l'anglais *Field Programmable Gate Array*), un GPU (processeur graphique) ou un GPGPU (de l'anglais *General*-*purpose processing on graphics processing*), ou encore sous forme d'un circuit intégré dédié, tel qu'un ASIC (de l'anglais *Application Specific Integrated Circuit*).

Le logiciel de génération automatique d'alertes est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

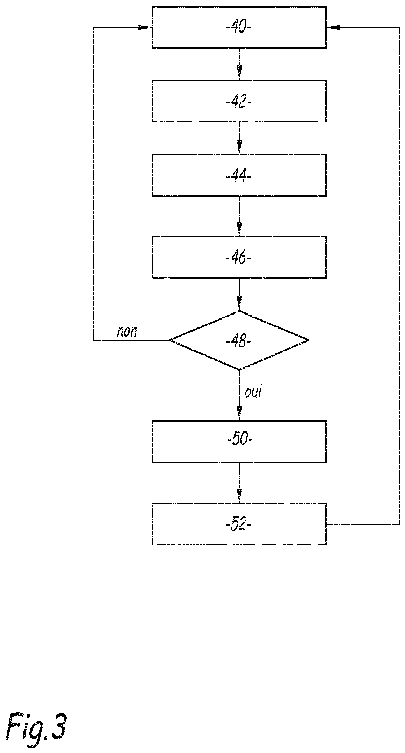

La figure 3 est un logigramme des étapes d'un procédé de génération automatique d'alertes selon un mode de réalisation de l'invention.

Le procédé comporte une première étape 40 de réception de données issues de capteurs, en provenance de l'unité 23 d'obtention d'informations permettant de détecter des éléments de trafic présents dans une zone environnante du véhicule porteur du système, que le véhicule porteur soit en mouvement ou à l'arrêt.

Dans un mode de réalisation, les capteurs sont de type lidar, et les données issues de capteurs comprennent des données de position détectée d'au moins un point d'élément de trafic à un instant donné. Par exemple, une séquence de données de position relevées à des instants temporels successifs dans un intervalle temporel d'analyse sont reçues.

En variante ou en complément, les capteurs embarqués comprennent une ou plusieurs caméras, et dans ce cas les données issues de capteurs comprennent des images numériques, chaque image étant captée à un instant temporel donné, ou une vidéo comprenant une succession d'images, éventuellement codée selon un format de codage approprié, sur un intervalle temporel d'analyse.

Le procédé comprend ensuite une étape 42 de détection d'éléments de trafic dans la zone environnante, par exemple permettant de détecter leur position relativement au véhicule, dans un référentiel spatial choisi, et/ou leur trajectoire, et/ou leur vitesse de déplacement ou tout autre paramètre caractéristique du déplacement d'un élément de trafic en mouvement. L'étape 42 est par exemple mise en œuvre par des algorithmes de détection d'obstacles connus, par exemple des détections avec radar (effet doppler utilisé dans les radards et/ou Lidar), ou dans le domaine des ADAS comme le « collision warning » ou « emergency braking ».

L'étape 42 est suivie d'une étape 44 d'analyse et de classification des éléments de trafic détectés, ainsi que d'attribution d'un niveau de confiance associé au résultat obtenu. La classification comporte au moins deux catégories, qui sont les éléments de trafic fixes et les éléments de trafic en mouvement. Par exemple, une analyse des données reçues sur l'intervalle temporel d'analyse permet d'identifier des éléments de trafic fixes ou en mouvement, et, le cas échéant, d'estimer une vitesse de déplacement et une direction de déplacement de chaque élément de trafic détecté.

Par exemple, un algorithme de suivi (ou « tracking » en anglais) permet de déterminer la trajectoire d'un élément de trafic en mouvement et de prédire, avec un niveau de confiance associé, une suite de positions attendues de l'élément de trafic en mouvement à des instants temporels futurs.

Dans le cas où des images numériques sont disponibles, il est possible d'effectuer une analyse d'images et de détecter plus finement d'appartenance de chaque élément de trafic à une catégorie parmi des catégories prédéterminées, comprenant par exemple le type d'élément fixe (feu de signalisation, passage piéton, ralentisseur), véhicule automobile, vélo ou piéton.

Un niveau de confiance, par exemple un nombre compris entre 0 et 1, est associé à la classification de chaque élément de trafic détecté, où 0 indique le niveau de confiance le plus bas et 1 indique le niveau de confiance le plus élevé par rapport à la détection et à la classification de l'élément de trafic.

Le niveau de confiance associé à la détection s'applique non seulement à la classification des éléments de trafic détectés, mais également aux paramètres associés (vitesse, trajectoire) qui permettent ensuite de déterminer un risque de collision, et plus généralement si l'élément de trafic est susceptible d'être impliqué dans une situation à risque.

Par exemple, on utilise un algorithme à base de réseau de neurones pour calculer un tel niveau de confiance, par exemple en utilisant des fonctions de réseau de neurones proposées dans la bibliothèque Keras (se référer à l'adresse Internet https://keras.io/).

Un tel algorithme permet d'analyser les données issues des capteurs, par exemple les images, et de les comparer à des données préalablement enregistrées et labélisées, qui représentent ce qui est appelé « la vérité terrain ». Le niveau de confiance est calculable en fonction d'une évaluation préalable de la précision de l'algorithme choisi. L'évaluation est effectuée sur des données de tests, de manière connue, en fonction de critères de performance qui sont la précision et le rappel (ou « recall » en anglais).

Les éléments de trafic analysés pour lesquels le niveau de confiance calculé est supérieur ou égal à un seuil de confiance prédéterminés sont transmis à l'étape 46 de détermination de situation à risque.

Par exemple, le seuil de confiance est choisi en fonction des critères de précision et de rappel, de préférence en fixant un niveau de précision très élevé et un niveau de rappel moyen.

Dans un mode de réalisation, le seuil de confiance est fixé par retour d'expérience suite à une phase de test.

L'étape 46 met en œuvre une détermination de situation à risque mettant en jeu plusieurs éléments de trafic, impliquant ou non le véhicule porteur du système.

Les situations à risque sont par exemple préalablement répertoriées et mémorisées, par exemple en fonction de la présence de piétons et/ou d'éléments de trafic fixes d'un certain type obligeant le véhicule porteur à ralentir.

Une situation à risque est une situation susceptible de provoquer un incident ou un accident, par exemple une collision, frontale ou latérale, entre éléments de trafic, ou la présence d'obstacles (e.g. ralentisseurs) susceptibles d'endommager un véhicule, ou bien des conditions de trafic identifiées comme inhabituelles, par exemple la présence d'un feu de signalisation de chantier. Bien entendu, la liste ci-dessus est non exhaustive, d'autres situations à risque pouvant être envisagées.

La détermination d'une situation à risque prend en considération des paramètres de mouvement d'éléments de trafic en mouvement détectés (vitesse, trajectoire détectée et prédite de l'élément de trafic), les catégories associées aux éléments de trafic détectés. Par ailleurs, les éléments de trafic potentiellement impliqués dans une situation à risque sont identifiés. En particulier, les paramètres de mouvement des éléments de trafic détectés permettent de mettre en œuvre une prévision de collision.

En cas de détermination d'une situation à risque (vérification à l'étape de vérification de présence de situation à risque 48), notamment du type impliquant au moins un autre usager de la route associé à un élément de trafic impliqué dans la situation à risque, par exemple un piéton ou un conducteur/passager d'un autre véhicule roulant, le procédé comprend une étape de sélection.

Le procédé comprend ensuite une étape 50 de détermination et de sélection d'un ou plusieurs dispositifs d'alerte à actionner, en fonction de la situation à risque déterminée. Il s'agit d'une sélection d'affichage contextuel. Par exemple, si plusieurs types de dispositifs d'alerte embarqués sont présents, il est déterminé à l'étape 50 quel type de dispositif d'affichage utiliser, par exemple sonore et/ou écran d'affichage.

En particulier, l'analyse de situation fournit des informations de position spatiale des éléments de trafic impliqué dans la situation à risque, et des usagers de la route associés. Avantageusement, la sélection d'un dispositif d'alerte tient compte de la position spatiale des usagers externes à alerter, le dispositif d'alerte étant choisi de manière à ce que l'alerte soit appréhendée facilement et rapidement par cet usager. Par exemple, lorsque plusieurs écrans d'affichage sont disponibles, l'écran situé de manière à être visible par l'usager de la route impliqué est choisi. Par exemple, dans le scénario de la figure 1, c'est l'écran d'affichage arrière du véhicule 10 qui est choisi pour afficher des informations à destination du conducteur du véhicule 20.

De plus, un message d'alerte est déterminé de manière contextuelle en fonction de la situation à risque déterminée : message textuel, ou dessin/indicateur de danger, type de son ou texte d'alerte à vocaliser par un procédé de synthèse.

Enfin, le procédé commande à l'étape 52 l'actionnement du ou des dispositifs d'alerte choisis avec le message d'alerte généré à l'étape 50. Le commandement de l'actionnement du dispositif d'alerte peut également être paramétré en fonction du type de situation à risque déterminé ou du niveau de risque déterminé. Par exemple, dans le cas d'un affichage visuel, un message clignotant peut être affiché en cas de niveau de risque élevé. Tout autre format ou mode d'affichage permettant d'indiquer le niveau de risque, facile à appréhender par un usager de la route externe, peut être choisi. Il est également possible de combiner plusieurs dispositifs d'alerte, par exemple visuel et sonore, pour indiquer une situation à risque d'accident élevé.

Le procédé retourne à l'étape d'obtention de données 40 préalablement décrite.

En cas de vérification négative à l'étape 48 de vérification de présence de situation à risque, l'étape 48 est également suivie de l'étape 40, sans actionnement des dispositifs d'alerte.

Avantageusement, le procédé de l'invention permet d'augmenter la sécurité routière en mettant de œuvre des dispositifs embarqués sur un véhicule autonome ou semi-autonome pour déterminer des situations à risque impliquant des usagers de la route externes au véhicule porteur, et de les alerter en conséquence.

## Revendications

1. Système de génération automatique d'alertes destinées aux usagers d'une route, embarqué sur un véhicule automobile comportant des capteurs embarqués, un dispositif électronique programmable embarqué et étant équipé d'au moins un dispositif d'alerte, sonore ou visuel, lesdits capteurs étant adaptés à fournir des informations au dispositif électronique programmable, ledit dispositif électronique programmable (24) comportant au moins un processeur (28) adapté à mettre en œuvre au moins un algorithme de détection d'éléments de trafic situés dans une zone environnante dudit véhicule, **caractérisé en ce que** ledit processeur (28) est configuré pour mettre en oeuvre :
- un module (32) d'analyse des éléments de trafic (16A, 16B, 16C, 16D, 20) détectés durant un intervalle temporel, permettant d'associer chaque élément de trafic détecté à une catégorie prédéterminée, et de calculer un niveau de confiance associé,
- un module (34) de détermination d'une situation à risque, parmi une pluralité de situations de risque prédéterminées, impliquant des éléments de trafic détectés, en fonction du résultat du module d'analyse (32) et du niveau de confiance calculé, au moins un desdits éléments de trafic étant associé à au moins un usager de la route externe audit véhicule,
et **en ce que** le système (11) est adapté à mettre en œuvre (36) au moins un desdits dispositifs d'alerte (18, 18A, 18B) embarqués pour avertir ledit au moins un usager de la route du risque détecté.

2. Système selon la revendication 1, dans lequel pour chaque élément de trafic en mouvement, ledit niveau de confiance est également associé à au moins un paramètre caractérisant le mouvement dudit élément de trafic.

3. Système selon la revendication 1 ou 2, dans lequel lesdits dispositifs d'alerte (18, 18A, 18B) comprennent au moins un écran d'affichage placé de manière à être visible de l'extérieur du véhicule, et /ou au moins un dispositif d'alerte sonore.

4. Système selon l'une des revendications 2 ou 3, dans lequel la mise en œuvre desdits dispositifs d'alerte (18, 18A, 18B) est effectuée contextuellement à la situation à risque déterminée.

5. Système selon la revendication 4, adapté à déterminer une position dudit au moins un usager de la route externe et à sélectionner au moins un desdits dispositifs d'alerte à actionner en fonction de ladite position.

6. Procédé de génération automatique d'alertes destinées aux usagers d'une route, embarqué sur un véhicule automobile comportant des capteurs embarqués, un dispositif électronique programmable embarqué et étant équipé d'au moins un dispositif d'alerte, sonore ou visuel, lesdits capteurs étant adaptés à fournir des informations au dispositif électronique programmable, ledit dispositif électronique programmable comportant au moins un processeur adapté à mettre en œuvre au moins un algorithme de détection d'éléments de trafic situés dans une zone environnante dudit véhicule, ledit procédé étant mis en œuvre par ledit processeur et étant **caractérisé en ce qu'**il comporte des étapes de :
- analyse (42, 44) des éléments de trafic détectés durant un intervalle temporel, permettant d'associer chaque élément de trafic détecté à une catégorie prédéterminée, et calcul d'un niveau de confiance associé,
- détermination (46) d'une situation à risque, parmi une pluralité de situations de risque prédéterminées, impliquant des éléments de trafic détectés, en fonction du résultat de l'étape d'analyse et du niveau de confiance calculé, au moins un desdits éléments de trafic étant associé à au moins un usager de la route externe audit véhicule,
- mise en œuvre (50, 52) d'au moins un desdits dispositifs d'alerte embarqués pour avertir ledit au moins un usager de la route du risque détecté.

7. Procédé selon la revendication 6, dans lequel l'étape d'analyse met en œuvre un algorithme de classification à base de réseaux de neurones.

8. Procédé selon la revendication 7, dans lequel le niveau de confiance est déterminé en fonction de critères de performance de l'algorithme de classification à base de réseaux de neurones, comprenant un niveau de précision et un niveau de rappel.

9. Procédé selon l'une des revendications 6 à 8, dans lequel la mise en œuvre d'un des dispositifs d'alerte comprend une sélection (50) d'un dispositif à actionner en fonction d'une position spatiale d'au moins un élément de trafic impliqué dans ladite situation à risque déterminée, et une commande (52) d'actionnement du ou des dispositifs d'alerte sélectionnés avec un message d'alerte généré contextuellement à ladite situation à risque déterminée.

10. Programme d'ordinateur comportant des instructions logicielles qui, lorsqu'elles sont exécutées par un ordinateur, mettent en œuvre un procédé de génération automatique d'alertes selon l'une des revendications 6 à 9.
